# EUROPEAN PATENT SPECIFICATION

(11) **EP 0 612 493 B1**
(45) Date of publication and mention of the grant of the patent: **03.05.2000**
(21) Application number: 94102085.1
(22) Date of filing: 10.02.1994
(51) Int. Cl.: A47H 13/00, B29C 45/00

(54) **Hanging cloth attaching device**
Gardinenbefestigungsvorrichtung
Dispositif d'attache de rideau

(30) Priority: 23.02.1993 JP 618393 U
(43) Date of publication of application: 31.08.1994
(73) Proprietor: YKK CORPORATION, Chiyoda-ku, Tokyo (JP)
(72) Inventor: Akeno, Mitsuru, Kurobe-shi, Toyama-ken (JP); Kusayama, Masahiro, Farnham Royal, Buckinghamshire (GB)
(74) Representative: Patentanwälte Leinweber & Zimmermann

(56) References cited:
- EP-A- 0 464 754
- EP-A- 0 499 461
- GB-A- 1 143 552
- US-A- 3 235 926
- US-A- 5 109 912
- PATENT ABSTRACTS OF JAPAN vol. 7, no. 31 (M-192)8 February 1983 & JP-A-57 185 109 (HASHIMOTO FORMING KOGYO KK) 15 November 1982

## Description

### BACKGROUND OF THE INVENTION

### 1. Field of the Invention:

This invention relates to a hanging cloth attaching device which enables simple attaching and detaching of various kinds of hanging cloth, such as curtains for use in home, office, theater, hospital, etc., to and from a hanger in the form of a curtain runner supported by a guide member such as a curtain rail or a guide rod. More particularly the invention relates to a hanging cloth attaching device which is excellent in producibility and can be colored with a wide color selection to fit to the design and color of a cloth to be hung.

### 2. Description of the Related Art:

Most of curtains in, for example, hospitals and hotels are rental and are exchanged periodically for cleaning. In order to facilitate this exchanging work, the attaching and detaching of the individual curtains must be done in a simple manner. Conventionally, various proposals have been made to facilitate the attaching and detaching of a curtain to and from the curtain runner supported by a guide member such as a curtain rail or a guide rod.

For example, in one conventional hanging cloth attaching device disclosed in Japanese Patent Publication No. SHO 40-27706 and Japanese Utility Model Laid-Open Publication No. SHO 57-142986, a number of curtain runners are attached to an elongated male or female surface fastener tape at regular distances and, on the other hand, a companion surface fastener tape engageable with the first-named surface fastener tape is attached to the upper edge of a curtain along its entire length. When the opposite surface fasteners are only pressed against each other with a relative small force, the curtain can be attached to the curtain runner. For detaching the curtain from the curtain runner, it is required only to peel off the opposite surface fasteners from each other.

According to another conventional hanging cloth attaching device disclosed in Japanese Utility Model Laid-Open Publication No. HEI 2-107387, a male or female surface fastener is attached to an engaging portion of the curtain runner and, on the other hand, a companion surface fastener is attached to the upper edge of a curtain for engagement with the curtain-runner-side surface fastener so that the attaching and detaching of the curtain can be performed in a simple manner.

However, with either of the two conventional hanging cloth attaching devices, since the surface fasteners are formed by knitting and/or weaving, not only it is poor in producibility, but it is difficult to secure adequate engaging force.

In an attempt to solve these problems, the present inventor has developed a hanging cloth attaching device, which is disclosed in, for example, Japanese Utility Model Laid-Open Publication No. HEI 4-104909. The hanging cloth attaching device is an injection molded unitary form including a plate-like synthetic resin engaging member with a multiplicity of hooks arranged orderly on one face, and a metallic attachment member in the form of two metal wires whose free ends are to be detachably engaged with each other for being attached to the curtain runner. During production, the product can be removed from a mold simply by hooking the metallic attachment member, which is projecting out of the mold, by a suitable hook means, instead of ejecting by ejector pins.

With the hanging cloth attaching device disclosed in Japanese Utility Model Laid-Open Publication No. HEI 4-104909, since a multiplicity of hooks constituting the male engaging surface are molded, the engaging force of the surface fasteners could be improved to a degree, compared to the conventional knit or woven monofilament hooks. Nonetheless, partly since a metallic attachment member must be formed separately from the molding of the hanging cloth attaching device, and partly since the metallic attachment member must be incorporated with the prospective synthetic resin member during injection molding, it would make the molding process complicated.

From a product point of view, since the metallic attachment member should act with a snap, resilient steel must be used, and a special consideration must be paid to its designing, which would increase the cost of production. Curtain runners, which are usually made of synthetic resin, are easily worn away due to the contact with the metallic attachment member and hence are not durable. Further, the attachment member and the engaging member are made of different materials, the entire appearance would be unsightly, and these two different members could have hardly been colored with the same tone even when the unity of color was attempted.

US-A-5,109,912 discloses a hanging cloth attaching device comprising a drapery carrier member having a flat portion and a head portion preferably integrally connected to a plate portion along an upper edge of said plate portion.

EP-A-0 499 461 discloses a hanger device comprising rows of hooks integrally formed on a surface of a body plate. Said body plate includes different regions, the hook rows in said regions having different orientations. Furthermore, within one region, neighbouring rows have hooks of reversed orientations.

It is an object of the invention to eliminate the product and production disadvantages of the conventional hanging cloth attaching device disclosed in Japanese utility model laid-open publication No. HEI 4-104909, sustaining the advantageous features of the same conventional device.

According to the invention, there is provided a hanging cloth attaching device situated between a cloth hanging member movable along a guide member and a hanging cloth, to an upper edge of which a female engaging member is attached, for connecting the upper edge of the hanging cloth and the cloth hanging member,
wherein said device comprises a hook-shape member to hook on the cloth hanging member, and a plate-like male engaging member having on one face a male engaging surface with a multiplicity of hooks projecting therefrom; and
wherein said hook-shape member and said plate-like male engaging member are integrally formed of synthetic resin, said male engaging surface having a flat portion devoid of the hooks at least at a region where an ejector pin contacts,
wherein said hooks are provided in vertical rows on both sides of said flat portion, the orientation of the hooks being upward in each of the rows, except one of the two rows being contiguous to said flat portion, where the hook orientation is downward.

In an alternative form, the cloth hanging member and the male engaging member may be molded in an integral form, with the hook-shape member omitted.

For attaching a hanging cloth to the guide member, a required number of cloth hanging members are previously inserted into the guide member, and then the hanging cloth attaching device of this invention is attached to the hanging portion. Then the engaging surface of the surface fastener tape attached to the upper edge of the hanging cloth is pressed against the male engaging surfaces of the arranged engaging members one after another with a relatively small force, thus finalizing the attaching of the hanging cloth. For removing the hanging cloth from the guide member, it is required simply to peel off the hanging cloth from one end or the other of the upper edge of the hanging cloth.

In opening and closing the hanging cloth thus attached to the guide member, since the individual engaging members are independent of one another, the upper edge portion of the hanging cloth would not become rigid so that the hanging cloth can be opened and closed very smoothly, and particularly the hanging cloth can be bundled stably when it is opened, thus securing a neat appearance.

For molding the hanging cloth attaching device of this invention, a mold is used which comprises a fixed mold half having a cavity for forming the back side of the plate portion of the male engaging member and the hook-shape member, both of which are comprised in the hanging cloth attaching device, a movable mold half having a cavity for forming the front side of the same hook-shape member and the plate portion of the same male engaging member, and a group of templates having a multiplicity of pairs of cavities, each pair for forming a single row of hooks.

When the movable mold half together with the template group is moved toward the fixed mold half to close the mold, molten resin is injected into the cavities of the mold through a sprue and runners. When the mold is opened after cooled, firstly the movable mold half with the hook forming cavities of the templates is separated apart, whereupon the molded product is removed out of the mold. At that time, since the hooks of the male engaging member adhere to and stay in the template cavities, it is impossible to remove the molded product from the movable mold smoothly unless external force is exerted on the mold. Consequently, ejector pins are actuated through the movable mold half, after the mold has been opened, to strike the local flat portion formed on the engaging surface, thereby forcing the molded product out of the mold.

In order to direct a multiplicity of hooks of the engaging surface in different orientations, the orientation of the hooks of the rows contiguous to the flat portion is different from one another. With this arrangement, it is possible to prevent the hanging cloth from being accidentally removed from the hanging cloth attaching device even when the hanging cloth is raised. In general, if the orientations of hooks of the rows are changed recklessly under a predetermined hook density which secures a predetermined strength of engaging force, the rate of engagement with the companion engaging member would be lowered so that the required strength of engaging force cannot be obtained. Whereas in this invention, partly since the engaging surface locally has a flat portion and partly since the orientations of hooks of neighboring rows on opposite sides of the flat portion are different from one another, a high rate of engagement with the companion engaging member would be guaranteed, securing a desired degree of engaging strength.

### BRIEF DESCRIPTION OF THE DRAWINGS

FIG. 1 is a fragmentary exploded perspective view showing a curtain attaching portion for which a curtain attaching device according to a typical embodiment of this invention is applied;
FIG. 2 is a front view showing one embodiment of the curtain attaching device of FIG. 1;
FIG. 3 is a cross-sectional view taken along line A-A of FIG. 2; and
FIG. 4 is a cross-sectional view taken along line B-B of FIG. 2.

### DETAILED DESCRIPTION

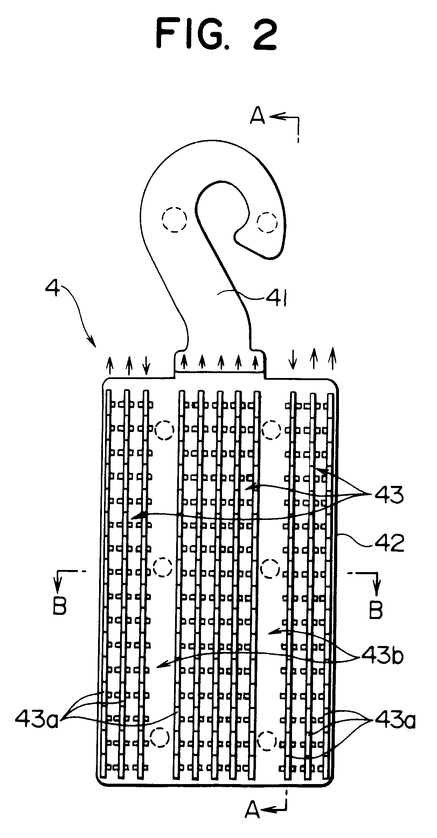

An embodiment of this invention will now be described in detail with reference to the accompanying drawings. This invention should by no means be limited to the illustrated embodiment, which will be understood from the following description. Particularly in the illustrated embodiment, a male engaging surface 43 of a curtain attaching device 4 has a number of vertical rows of hooks, which are divided into a three-row group, a five-row group and a three-row group by straight hook-free flat portions locally formed at regions corresponding to ejector pins described below. The orientation of hooks of the rows contiguous to the central five-row group via the flat portions is downward, as indicated by arrows in FIG. 2, reverse to the orientation of hooks of the remaining rows. In an alternative form, though not shown, the male engaging surface 43 may be divided into a number of sections different in orientation of hooks from one another.

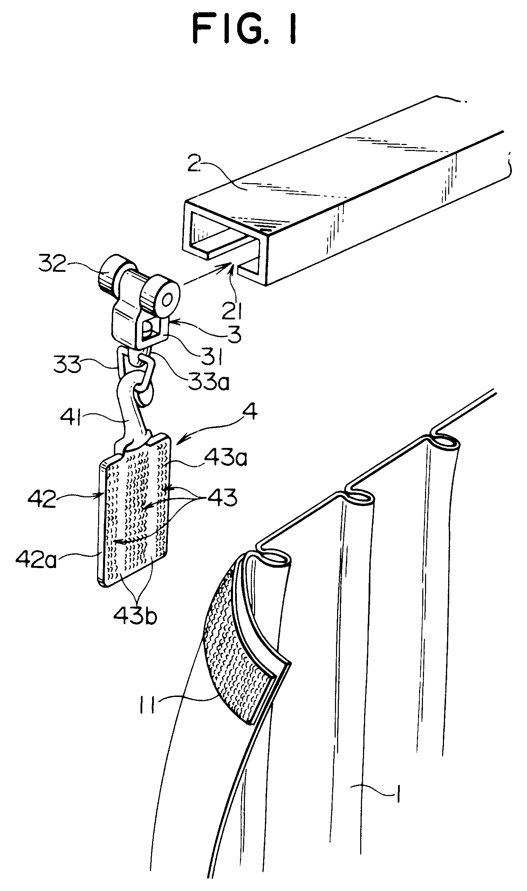

FIG. 1 is a fragmentary exploded perspective view of a curtain attaching portion in which a curtain attaching device embodying a typical construction of this invention is shown. Reference numeral 1 designates a curtain or a hanging cloth, to which a female surface fastener tape 11 is attached along the entire upper edge. 2 designates a curtain rail, or a guide member, in the form of an elongated bar of generally C-shape cross section having a slit 21 in the bottom.

According to this embodiment, a cloth hanging member or curtain runner 3 is separate from a hanging cloth attaching device or a curtain attaching device 4. Each curtain runner 3 has a runner body 31, a pair of rollers 32 on opposite sides of the upper end of the runner body 31 and a ring 33 attached to the lower end of the runner body 31 and rotatable about a vertical axis.

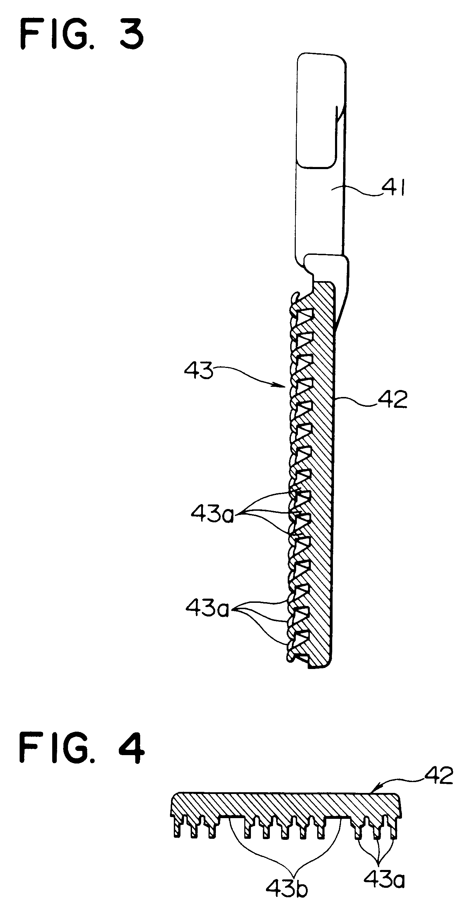

On the other hand, the curtain attaching device 4, as shown in FIGS. 2 through 4, comprises a hook-shape member 41 to be engaged with the ring 33 of the curtain runner 3, and a plate-like male engaging member 42. The male engaging member 42 has on one face a male engaging surface 43 with a multiplicity of standing hooks 43a. The hooks 43a of the male engaging surface 43 are arranged in vertical rows and groups of rows are arranged horizontally. In the illustrated example, the total number of hook rows is eleven, namely, five in the center and three on each side of the central five-row group with a predetermined hook-free space therefrom. This hook-free portion defines a flat portion 43b having a width enough to receive non-illustrated ejector pins.

As shown in FIG. 2, the orientation of the hooks 43a of all rows except two neighboring rows of the central five rows is upward as indicated by arrows, and the orientation of the hooks 43a of the two exceptional rows is downward as indicated by arrows.

The curtain attaching device 4 is formed in a unitary structure by injection molding.

The molding process will now be described in brief. An injection molding mold to be used for this molding process includes a fixed mold half having a cavity, for forming the back side of the hook-shape member 41 and a plate portion 42a of the male engaging member 42, both of which are comprised in the curtain attaching device 4, a movable mold half having a cavity, for forming the front side of the same hook-shape member 41 and the plate portion 42a of the same male engaging member 42, and a set of templates having a multiplicity of sets of cavitites, each set for forming a single row of hooks 43a. When the movable mold half together with the template group is moved toward the fixed mold half to close the mold, molten resin is injected into the cavities of the mold through a sprue and runners. When the mold is opened after cooled, firstly the movable mold half with the hook forming cavities of the templates is separated apart, whereupon the molded product is removed out of the mold. At that time, since the hooks 43a of the male engaging member 42 adheres to and stays in the template cavities, it is impossible to remove the molded product from the movable mold smoothly unless external force is exerted on the mold. Consequently, ejector pins are actuated through the movable mold half, after the mold has been opened, to strike the two local flat portions 43b formed on the engaging surface, thereby forcing the molded product out of the mold.

Specifically, the male engaging surface 43 of this invention has locally portions devoid of the hooks 43a so that the non-illustrated ejector pins can strike on the hook-free portions to facilitate the removing of the molded product. These hook-free portions are defined by the two straight flat portions 43b formed between the three-row set, the five-row set and the three-row set.

Further, the orientation of hooks of the rows contiguous to the central five hook rows via the flat portions 43b is downward as indicated by arrows, reverse to that of the hooks of the remaining rows. With this arrangement, it is possible to prevent the curtain 1 from being accidentally removed from the curtain attaching device 4 even when the curtain is raised. In general, if the orientations of hooks of the rows are changed recklessly under a predetermined hook density which secures a predetermined strength of engaging force, the rate of engagement with the companion engaging member would be lowered so that the required strength of engaging force cannot be obtained. Whereas in this invention, since the orientations of hooks of neighboring rows on opposite sides of the flat portion 43b are different from one another, a high rate of engagement with the companion engaging member would be guaranteed, securing a desired degree of engaging strength.

With the curtain attaching device 4 of this invention, since the hook-shape member 41 and the engaging member 42 are simultaneously and integrally molded by a single injection, an excellent producibility can be achieved. Further, partly since the molded product can be removed reliably using the ejector pins, and partly since the ejector pins do not strike any hook row, the hook rows would be free from any damage. Since the hook-shape member 41 and the engaging member 42 are formed of the same material, they can be colored in the same tone. Since the hook-shape member 41 is formed of synthetic resin, the synthetic resin curtain runner, with which the hook-shape member 41 is to be engaged, would be free from being damaged by the hook-shape member 41 and hence would be durable.

In this embodiment, the surface fastener tape to be attached to the upper edge of the curtain 1 is a surface fastener tape having fiber loops formed by usual knitting or weaving. Alternatively, the surface fastener tape may be substituted by an injection-molded member similar in structure to the male engaging member 42 of the curtain attaching device 4 of this invention. In this case, it is essential that the orientation of hooks of the curtain attaching device 4 should be reverse to that of the hooks of the injection molded surface fastener to be attached to the curtain 1 and also that the orientation of hooks of the injection molded surface fastener to be attached to the curtain 1 should be downward, thus effectively preventing the curtain 1 from being accidentally removed by its own weight.

Further, in this embodiment, the curtain attaching device 4 and the curtain runner 3 are separate from each other. In an alternative form, the body 31 of the curtain runner 3 may be molded integrally with the engaging member 42, omitting the ring 33 of the curtain runner 3 and the hook-shape member 41 of the curtain attaching device 4. In this case, the curtain runner 3 corresponds to the hook-shape member 41 of the hanging cloth attaching device 4 of this invention, and preferably, the connecting portion between the body 31 of the curtain runner 3 and the engaging member 42 should be of a structure such that the engaging member 42 is rotatable with respect to the runner body 31 similar to that of the connecting portion 33a between the runner body 31 and the ring 33 of FIG. 1. For example, if the curtain runner 3 does not have any rollers 32 and is of a simple structure having a circular flange-like head on the upper end of the neck of the body 31, the curtain runner 3 is rotatable about a vertical axis in the curtain rail 2 so that the runner 3 and the engaging member 42 can rotate as a single unit about a vertical axis. It is therefore unnecessary to use the special structure for rotation such as shown in FIG. 1.

As is apparent from the foregoing detailed description, according to this invention, the attaching and detaching of the curtain can be performed in a very simple operation, facilitating the curtain exchange. And the upper edge portion of the hanging cloth would not become rigid so that the hanging cloth can be opened and closed very smoothly, particularly the hanging cloth can be bundled stably when it is opened, thus securing a neat appearance.

Since the entire structure of the curtain attaching device of this invention can be molded in a unitary form, an improved rate of production can be achieved. Since the male engaging surface constituted by a multiplicity of hooks has locally flat portions, it is possible to prevent the hooks from being damaged when the molded product is removed from the mold by the ejector pins. Because of presence of the flat portions, if the orientation of hooks of the rows contiguous to the flat portions is different from that of hooks of the remaining rows, the rate of engagement with the companion engaging member would not be lowered so that a required degree of engaging strength can be secured.

Furthermore, since the whole of the curtain attaching device of this invention is made of the same material, it is easy to color in a tone fit to the design of the hanging cloth, thus meeting a wide variety of demands so that a high-quality product neat in appearance can be obtained.

## Claims

1. A hanging cloth attaching device (4) situated between a cloth hanging member (3) movable along a guide member (2) and a hanging cloth (1), to an upper edge of which a female engaging member (11) is attached, for connecting the upper edge of the hanging cloth (1) and the cloth hanging member (3),
wherein said device comprises a hook-shape member (41) to hook on the cloth hanging member (3), and a plate-like male engaging member (42) having on one face a male engaging surface (43) with a multiplicity of hooks (43a) projecting therefrom; and
wherein said hook-shape member (41) and said plate-like male engaging member (42) are integrally formed of synthetic resin, said male engaging surface (43) having a flat portion (43b) devoid of the hooks (43a) at least at a region where an ejector pin contacts,
characterized in that said hooks (43a) are provided in vertical rows on both sides of said flat portion (43b), the orientation of the hooks being upward in each of the rows, except one of the two rows being contiguous to said flat portion (43b), where the hook orientation is downward.

2. A hanging cloth attaching device (4) situated between a cloth hanging member (3) movable along a guide member (2) and a hanging cloth (1), to an upper edge of which a female engaging member (11) is attached, for connecting the upper edge of the hanging cloth (1) and the cloth hanging member (3),
wherein said device comprises said cloth hanging member (3), and a plate-like male engaging member (42) having on one face a male engaging surface (43) with a multiplicity of hooks (43a) projecting therefrom, said male engaging surface (43) having a flat portion (43b) devoid of the hooks at least at a region where an ejector pin contacts,
characterised in that said plate-like male engaging member (42) is formed integrally with said cloth hanging member (3) and in that
said hooks (43a) are provided in vertical rows on both sides of said flat portion (43b), the orientation of the hooks being upward in each of the rows, except one of the two rows being contiguous to said flat portion (43b), where the hook orientation is downward.

## Patentansprüche

1. Befestigungseinrichtung (4) für ein aufgehängtes Textilstück, die angeordnet ist zwischen einem entlang einem Führungselement (2) bewegbarem Textilstückaufhängelement (3) und einem aufgehängten Textilstück (1), wobei an einer oberen Kante der Einrichtung ein weibliches Eingriffselement (11) befestigt ist, und zwar zum Verbinden der oberen Kante des aufgehängten Textilstücks (1) und des Textilstückaufhängelements (3),
wobei die Einrichtung aufweist ein hakenförmiges Element (41) zum Einhaken an dem Textilstückaufhängelement (3) und ein plattenartiges männliches Eingriffselement (42) mit einer männlichen Eingriffsoberfläche (43) an einer Fläche mit einer Mehrzahl davon abstehender Haken (43a); und
wobei das hakenförmige Element (41) und das plattenartige männliche Eingriffselement (42) einstückig aus Kunststoff gebildet sind und die männliche Eingriffsoberfläche (43) einen zumindest in einem Bereich für einen Kontakt mit einem Auswurfstift von den Haken (43a) freien flachen Abschnitt (43b) aufweist,
dadurch gekennzeichnet, daß die Haken (43a) in vertikalen Reihen auf beiden Seiten des flachen Abschnitts (43b) vorgesehen sind und die Orientierung der Haken in jeder der Reihen nach oben gerichtet ist außer einer der beiden Reihen, die an dem flachen Abschnitt (43b) anschließen, wo die Hakenorientierung nach unten gerichtet ist.

2. Befestigungseinrichtung (4) für ein aufgehängtes Textilstück, die angeordnet ist zwischen einem entlang eines Führungselement (2) bewegbarem Textilstückaufhängelement (3) und einem aufgehängten Textilstück (1), wobei an einer oberen Kante der Einrichtung ein weibliches Eingriffselement (11) befestigt ist, und zwar zum Verbinden der oberen Kante des aufgehängten Textilstücks (1) und des Textilstückaufhängelements (3),
wobei die Einrichtung aufweist das Textilstückaufhängelement (3) und ein plattenartiges männliches Eingriffselement (42) mit einer männlichen Eingriffsoberfläche (43) mit einer Mehrzahl davon abstehender Haken (43a) auf einer Seite und die männliche Eingriffsoberfläche (43) einen zumindest in einem Bereich für einen Kontakt mit einem Auswurfstift von den Haken freien flachen Abschnitt (43b) aufweist,
dadurch gekennzeichnet, daß das plattenartige männliche Eingriffselement (42) einstückig mit dem Textilstückaufhängelement (3) ausgebildet ist und
daß die Haken (43a) in vertikalen Reihen auf beiden Seiten des flachen Abschnitts (43b) vorgesehen sind und die Orientierung der Haken in jeder der Reihen nach oben gerichtet ist außer einer der beiden Reihen, die an dem flachen Abschnitt (43b) anschließen, wo die Hakenorientierung nach unten gerichtet ist.

## Revendications

1. Dispositif (4) d'attache de rideau situé entre un élément qui pend (3) mobile le long d'un élément de guidage (2) et un rideau (1), sur un bord supérieur duquel un élément d'accrochage femelle (11) est attaché, pour connecter le bord supérieur du rideau (1) à l'élément qui pend (3),
dans lequel ledit dispositif comprend un élément en forme de crochet (41) destiné à être accroché à l'élément qui pend (3), et un élément d'accrochage mâle plat (42) comportant sur une face une surface d'accrochage mâle (43) avec une multiplicité de crochets (43a) faisant saillie depuis celle-ci; et
dans lequel ledit élément en forme de crochet (41) et ledit élément d'accrochage mâle plat (42) sont faits d'un seul tenant en résine synthétique, ladite surface d'accrochage mâle (43) comportant une partie plate (43b) démunie de crochets (43a) au moins dans une région touchée par une broche d'éjecteur,
caractérisé en ce que lesdits crochets (43a) sont réalisés en rangées verticales des deux côtés de ladite partie plate (43b), les crochets étant orientés vers le haut dans chacune des rangées, sauf dans l'une des deux rangées contiguës à ladite partie plate (43b), où les crochets sont orientés vers le bas.

2. Dispositif (4) d'attache de rideau situé entre un élément qui pend (3) mobile le long d'un élément de guidage (2) et un rideau (1), sur un bord supérieur duquel un élément d'accrochage femelle (11) est attaché, pour connecter le bord supérieur du rideau (1) à l'élément qui pend (3),
dans lequel ledit dispositif comprend ledit élément qui pend (3), et un élément d'accrochage mâle plat (42) comportant sur une face une surface d'accrochage mâle (43) avec une multiplicité de crochets (43a) faisant saillie depuis celle-ci, ladite surface d'accrochage mâle (43) comportant une partie plate (43b) démunie de crochets au moins dans une région touchée par une broche d'éjecteur,
caractérisé en ce que ledit élément d'accrochage mâle plat (42) est formé d'un seul tenant avec ledit élément qui pend (3), et en ce que lesdits crochets (43a) sont réalisés en rangées verticales des deux côtés de ladite partie plate (43b), les crochets étant orientés vers le haut dans chacune des rangées, sauf dans l'une des deux rangées contiguës à ladite partie plate (43b), où les crochets sont orientés vers le bas.
